# EUROPEAN PATENT APPLICATION

(11) **EP 1 254 827 A2**
(43) Date of publication of application: **06.11.2002**
(21) Application number: 02253144.6
(22) Date of filing: 03.05.2002
(51) Int. Cl.: B62D 53/02, B62D 53/00

(54) **Vehicle with trailer**

(30) Priority: 03.05.2001 GB 0110892; 10.09.2001 GB 0121853
(71) Applicant: Multidrive Limited, Thirsk, North Yorkshire Y07 3BX (GB)
(72) Inventor: Brown, David John Bowes, Thirsk Y07 2DX, Yorkshire (GB)
(74) Representative: Godwin, Edgar James

(57) **Abstract**

A connecting section (3) is connected to the tractor (1) and trailer (2) so as to allow pivoting about a transverse axis (26), and the rearward end part (33) of the connecting section (3) is connected to the forward end part (13) so as to be pivotable about a vertical axis (38). The rearward end part (33) is additionally pivotable about a longitudinal axis (34).

## Description

This invention relates to articulated vehicles which comprise a tractor and a trailer.

The present invention provides a tractor unit having a chassis, an engine and transmission, and front and rear axles, a trailer unit having a chassis and at least front and rear axles, the trailer unit being spaced rearwardly of the tractor unit and a connecting section which connects the tractor chassis and the trailer chassis together, the connecting section having a forward end part and a rearward end part which are connected to the respective chassis and which are connected together so as to be pivotable about a vertical axis, at least one of the said end parts being connected to the associated chassis so as to be pivotable about a transverse axis spaced from the said vertical axis.

Preferably the trailer unit can rotate from side to side about the centre-line of a bearing in the connecting section.

In one embodiment of articulated vehicle the forward part of the connecting section is linked to the tractor chassis by one or more hydraulic piston-and-cylinder devices for controlling the load on an axle of the tractor unit.

The rear axle of the tractor unit is preferably connected to the front axle of the trailer unit by a series of drive shafts arranged in such a manner that, at all angles between the tractor unit and the parts of the connecting section and the trailer unit, the drive shafts maintain constant velocity.

One or more of the axles of the trailer unit may be driven from the engine and transmission located in the tractor unit.

A hydraulic piston-and-cylinder accumulator may be connected to pivots forward and rearward of the vertical pivot axis between the forward and rearward parts of the connecting section. The force exerted on the accumulator when the distance between the said pivots shortens (during turning of the vehicle) pressurises a gas in the accumulator, thereby counteracting the tendency of the trailer to travel in a straight line and reducing the steering force needed to return the articulated vehicle to a straight line after turning.

In another embodiment a tractor unit is connected to a driven trailer unit through a transverse pivot on the tractor chassis and a transverse pivot on the trailer chassis pivotally connected to a connecting section which has a vertical pivot in a mid position. Preferably the rear portion the rearward part of the connecting section can rotate longitudinally from side to side about the centre-line of a bearing.

In a preferred embodiment the tractor and trailer chassis are each connected by hydraulic cylinders to each adjacent part of the connecting section, thereby enabling weight transfer and pitch damping between tractor and trailer units. Two hydraulic cylinders are pivotally connected on either side of the centre-line of the connecting section at one end to the forward part and to a non-rotating portion of the rearward part. The cylinders are each individually connected to a hydraulic accumulator. During turning, the cylinders displace oil into the respective accumulator, thereby increasing the pressure and thus exerting a force to return the vehicle to a straight line.

In a preferred embodiment the rear axle of the tractor unit or a transfer gear box on the tractor unit is connected to the leading axle on the trailer unit and any additional axles by three drive shafts supported by two bearings in such a manner that, at all angles between tractor unit and trailer unit, the drive shafts maintain constant velocity during up and down movement of the tractor and trailer units and steering movement and rotational movement.

The invention will be described further, by way of example only, with reference to the accompanying drawings, in which:
Figure 1 is a side elevation of a first embodiment of an articulated vehicle;
Figure 2 is an enlargement of the detail II in Figure 1;
Figure 3 is an enlargement of the detail III in Figure 1;
Figures 4A and 4B are views similar to Figure 1, but showing the respective extremes of relative inclination of a tractor and a trailer;
Figure 5 is a plan view of the first embodiment of the vehicle, when turning;
Figure 6 is an enlargement of the detail VI in Figure 5;
Figure 7 is a view similar to Figure 1, but showing the trailer tilted sideways relative to the tractor;
Figure 8 is a rear end view of the vehicle as shown in Figure 7;
Figure 9 is a side elevation of a second embodiment of the articulated vehicle;
Figure 10 is a plan view, partly in phantom, corresponding to Figure 9;
Figures 11A and 11B are views similar to Figure 9, but showing the respective extremes of relative inclination of the tractor and the trailer;
Figure 12 is a plan view of the second embodiment of the vehicle;
Figure 13 is an enlargement of the detail XIII in Figure 12;
Figure 14 is a view similar to Figure 9, but showing the trailer tilted sideways relative to the tractor;
Figure 15 is an enlargement of the detail XV in Figure 14;
Figure 16 is a rear end view corresponding to Figure 14;
Figure 17 is a side elevation of a third embodiment of the articulated vehicle, with the trailer rotated about a longitudinal axis;
Figure 18 is a rear view corresponding to Figure 17;
Figure 19 is an enlargement of the detail XIX in Figure 17;
Figure 20 is a side elevation with the trailer below the horizontal of the tractor;
Figure 21 is an enlargement of the detail XXI in Figure 20;
Figure 22 is a side elevation with the trailer above the horizontal of the tractor;
Figure 23 is an enlargement of the detail XXIII in Figure 22;
Figure 24 is a plan view of the vehicle showing the turning angle between tractor and trailer; and
Figure 25 is an enlargement of the detail XXV in Figure 24, showing a steering linkage.

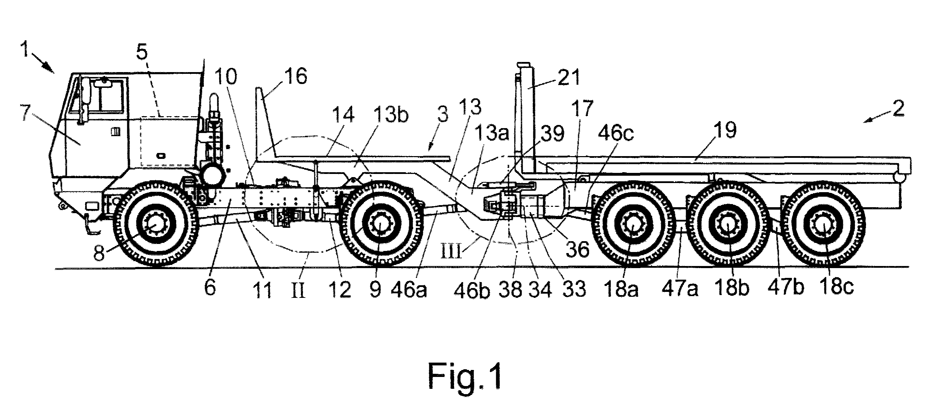

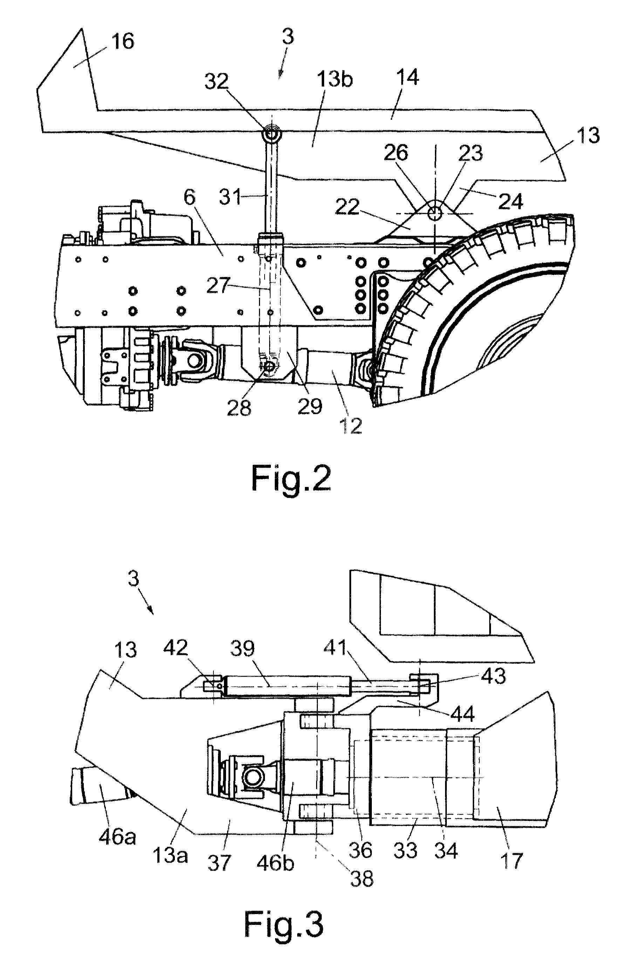

The articulated vehicle shown in Figures 1 to 8 comprises a leading steerable unit or tractor 1 and a trailing unit or trailer 2 which are connected by a connecting section 3. The tractor 1 has a chassis 6 which mounts a cab 7, an engine 5 and transmission 10, a steerable front axle 8, and a fixed rear axle 9, both axles 8,9 being driven from the transmission via respective cardan shafts 11,12.

The connecting section 3 of the trailer 2 has a forward end part or frame 13 with a rear portion 13a, which lies behind the tractor 1 and is at approximately the same level as the chassis 6, and a front portion 13b which extends over the chassis 6 and carries a load-carrying body comprising a flat bed 14 and a headboard 16. The trailer 2 has a chassis 17 which is approximately at the same level as the rear portion 13a of the frame 13 and which mounts three drivable axles (18a, 18b, 18c) and a load-carrying body comprising a flat bed 19 and a headboard 21.

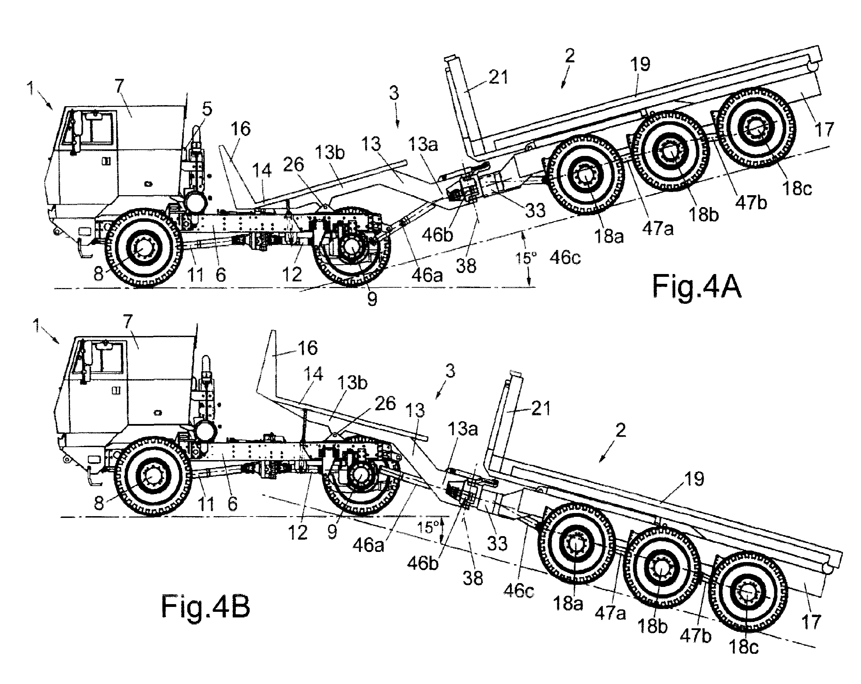

The chassis 6 of the tractor 1 has brackets 22 supporting mutually aligned transverse pivot pins 23 which in turn support respective brackets 24 integral with the front portion 13b of the frame 13 so that the connecting section 3 is pivotable about a transverse axis 26 ahead of the rear axle 9 of the tractor 1. The size of the brackets 22,24 and the relative spacing of the chassis 6,13 allow the trailer 2 to be inclined upwards and downwards relative to the tractor 1 by an angle of up to 15°, for example, as shown in Figures 4A and 4B. On each side of the centre line of the tractor 1 a hydraulic cylinder 27 has its lower end connected by a pivot 28 to a frame member 29 rigid with the chassis 6, while a piston 31 extends from the other end of the cylinder 27 and has its free end connected by a pivot 32 to a frame member of the connecting section 3. The cylinders 27 can be used to apply to the chassis 6 of the tractor 1 a moment of force (relative to the trailer) acting about the transverse axis 26 in order to control the load acting on the rear axle 9 of the tractor 1. The cylinders 27 also damp oscillation about the transverse axis 26.

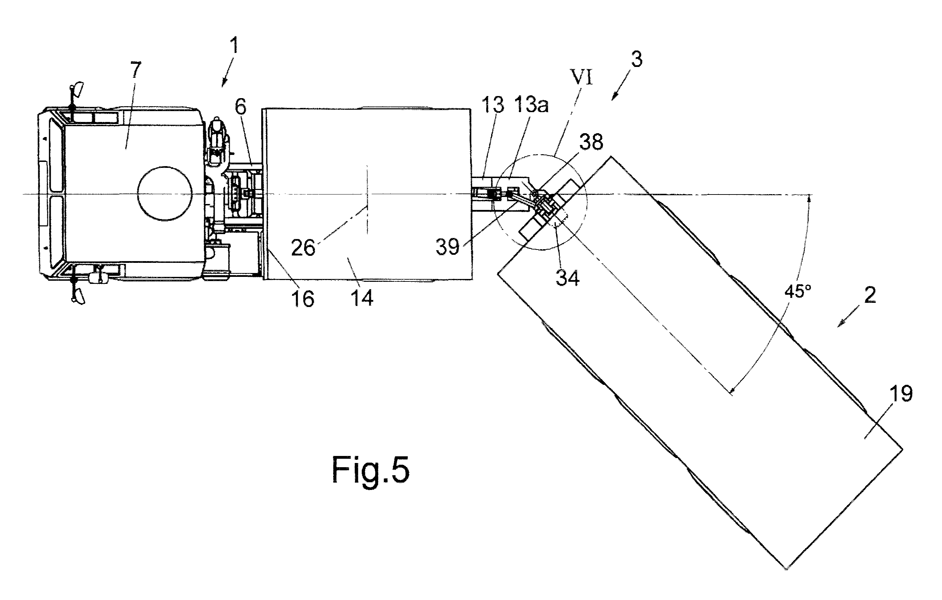

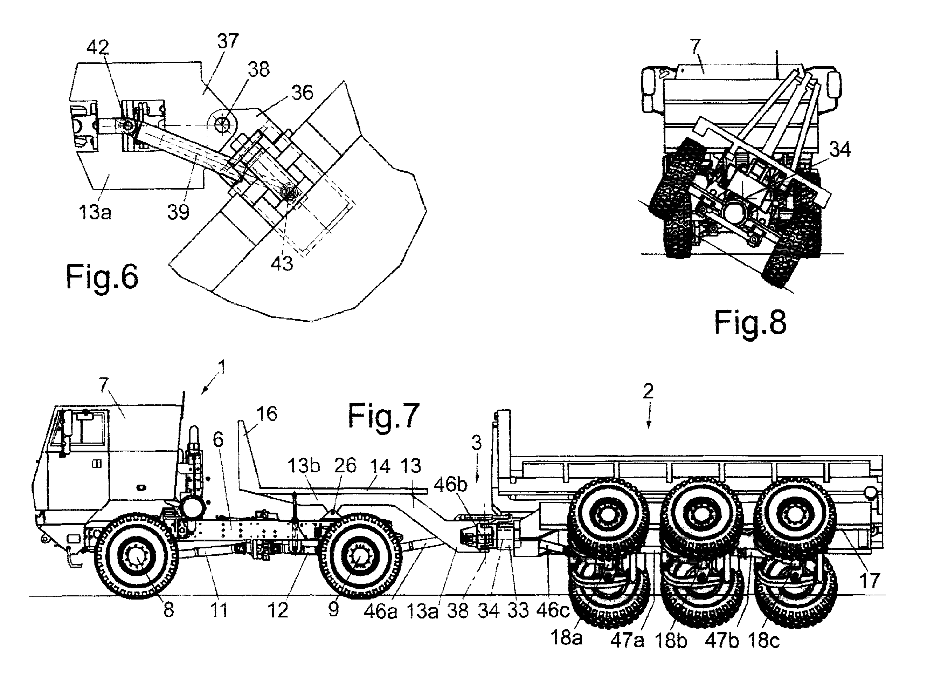

The front end of the trailer chassis 17 carries an annular bearing member 33 forming the rearward end part of the connecting section 3, defining a longitudinal axis 34 and supporting a rear hinge member 36 of the connecting section 3, for rotation about the axis 34. The hinge member 36 is connected to a front hinge member 37 (integral with the rear portion 13a of the frame 13) so as to be pivotable about a vertical axis 38. The hinge (36,37) allows the trailer 2 to pivot through an angle of up to 45°, for example, relative to the tractor 1, as shown in Figure 5. The bearing (33) allows the trailer 2 to tilt sideways, in both directions, through an angle of up to 30° or more, for example, as shown in Figures 7 and 8.

An accumulator comprising a hydraulic cylinder 39 with a piston 41 has one end connected to the rear portion 13a of the frame 13 by a pivot 42 in front of the vertical axis 38 and has the other end connected to a rearward extension 44 of the rear hinge member 36 by a pivot 43 behind the vertical axis 38. When the distance between the pivots 42,43 shortens during turning of the vehicle, as shown in Figures 5 and 6, the piston 41 pressurises nitrogen (or another gas) in an accumulation chamber in the cylinder 39. This pressure constitutes potential energy which is generated and stored by the cylinder 39 in response to changes in the angle between the centre lines of the rearward and forward parts of the connection section 3, due to relative turning of the parts about the vertical axis 38. As the angle increases, energy (in the form of pressure) is generated and stored and the angular increase is resisted; this counteracts the tendency of the trailer 2 to travel in a straight line. As the angle decreases, the stored pressure acts on the piston 41 so as to assist the angular decrease, thereby reducing the steering force needed to return the articulated vehicle to a straight line after turning.

Drive is transferred from the rear axle 9 of the tractor 1 to the front axle 18a of the rearward section 4 by a series of drive shafts 46a,46b,46c which maintain constant velocity transmission of rotation between the respective axles 9,18a at all angles between the tractor 1, the connecting section 3, and the trailer 2. The axles 18a,18b,18c of the trailer 2 are connected for rotation by drive shafts 47a,47b. Thus all the wheels of the vehicle are driven from the engine 5 and transmission 10 located in the tractor 1.

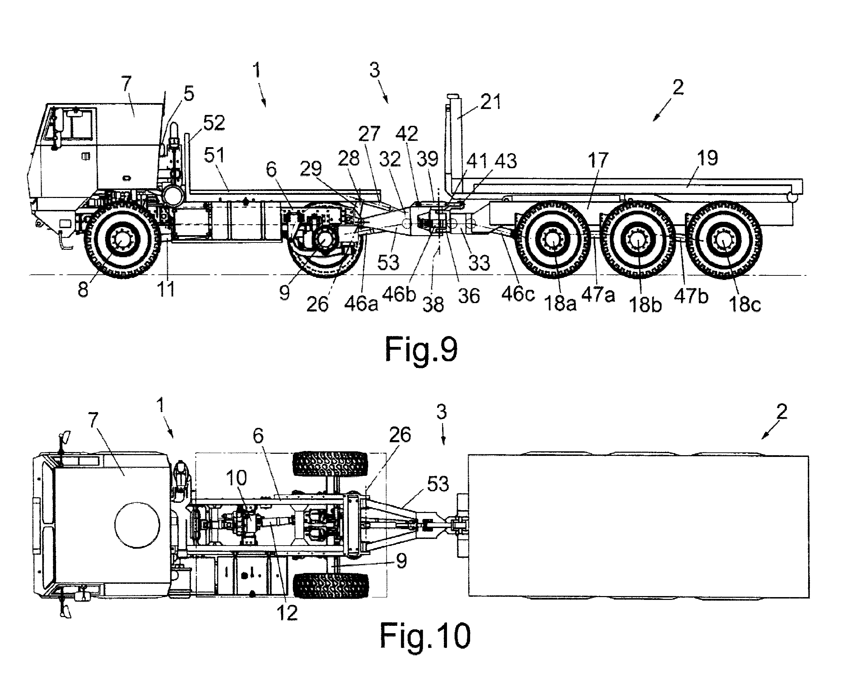

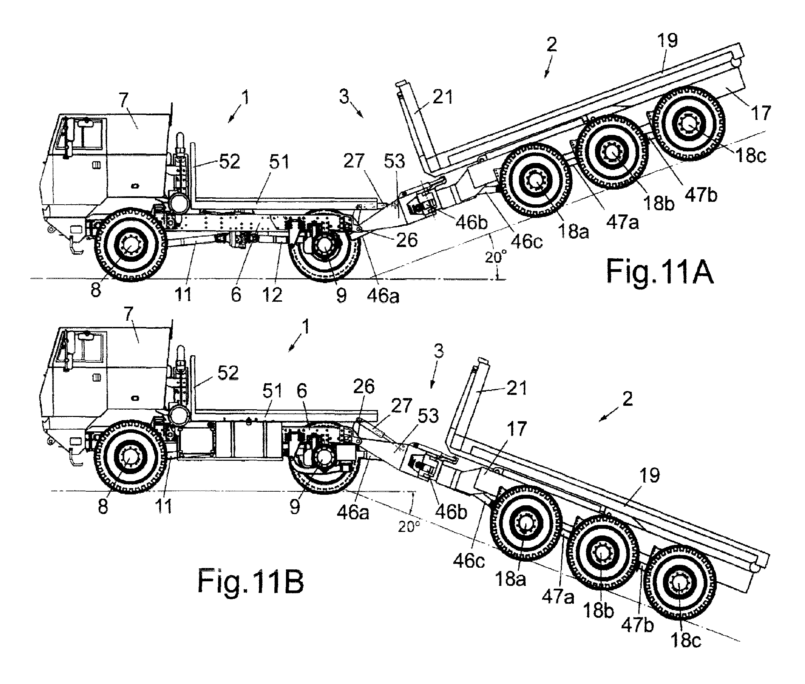

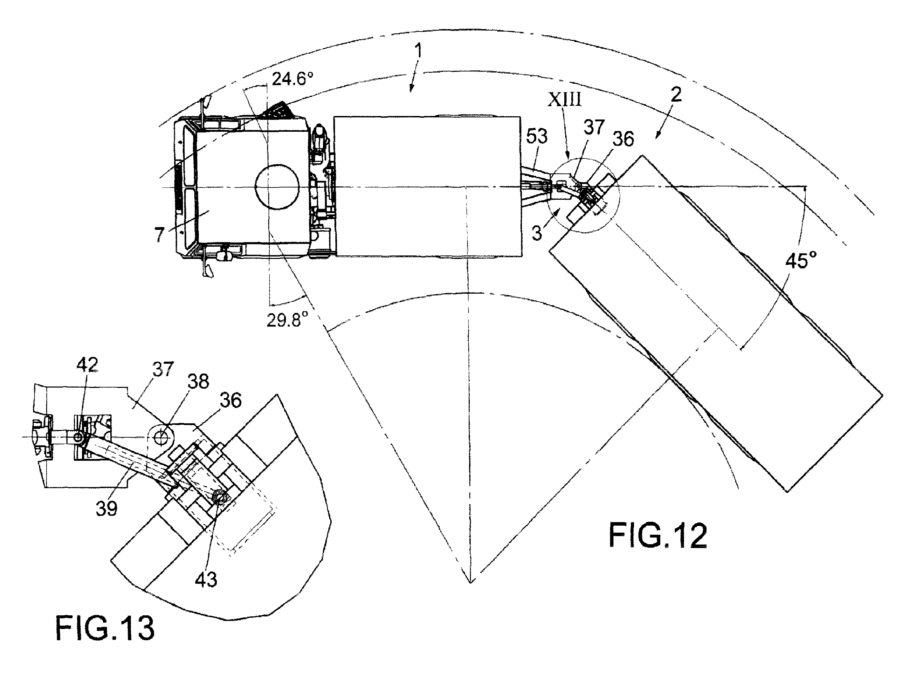

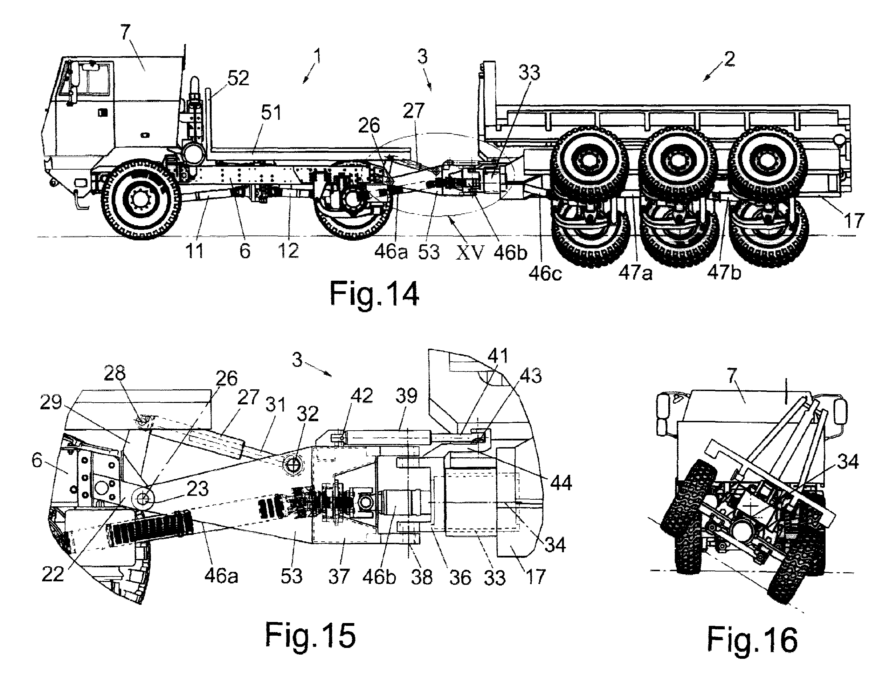

The second embodiment of the articulated vehicle, shown in Figures 9 to 16, is similar to the first embodiment, and only the differences will be specifically described. The tractor 1 has a load-carrying body comprising a flat bed 51 and a headboard 52, mounted on the chassis 6. The connecting section 3 comprises a forward end part or frame 53 which is approximately level with the chassis 6 of the tractor 1 and the chassis 17 of the trailer 2 and which has front end portions connected to the rear end of the chassis 6 so as to allow pivoting about the transverse axis 26, which in this embodiment lies behind the rear axle 9 of the tractor 1. The rear end of the frame 53 is provided with the above-mentioned front hinge member 37. The above-described piston-and-cylinder device (27, 31) for controlling the load on the rear axle 9 of the tractor 1 (and damping oscillation) is connected between a frame member 29 rigid with the rear end of the chassis 6 and the frame 53 (Figure 15). As shown in Figures 11A and 11B, the maximum angle of relative inclination of the tractor 1 and trailer 2 can be somewhat greater in this embodiment, for example, up to 20°.

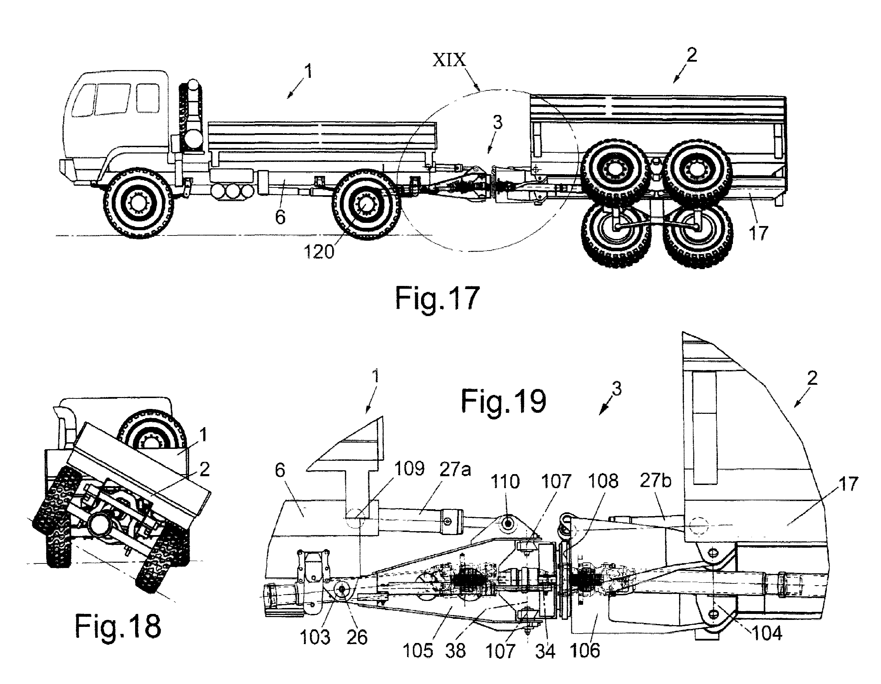

The third embodiment of the articulated vehicle is shown in Figures 17 to 25.

Referring to Figures 17 to 19, the tractor 1 is connected to the trailer 2 by a centre section or connecting section 3 which is connected by a transverse pivot 103 (axis 26) on the tractor chassis 6 and by a transverse pivot 104 on the trailer chassis 17. The centre section 3 has a forward end part 105 connected to a rearward end part 106 by a vertical pivot 107 (axis 38) and a longitudinal pivot (bearing) 108 (axis 34).

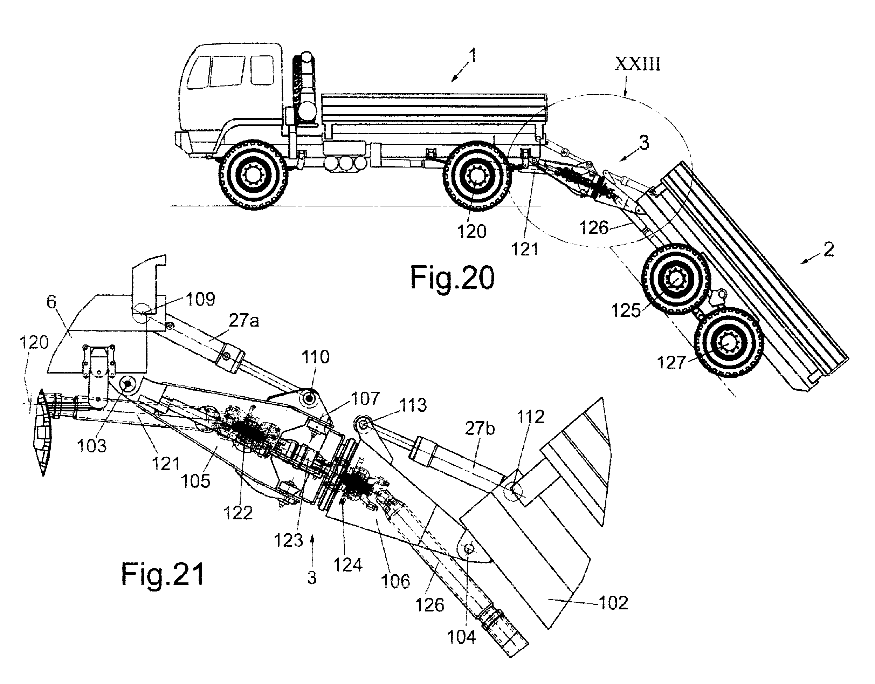

Figures 17 and 18 show how the trailer 2 can tilt about a longitudinal axis relative to the tractor 1. Figure 20 shows the trailer 2 rotated downwards relative to the tractor 1.

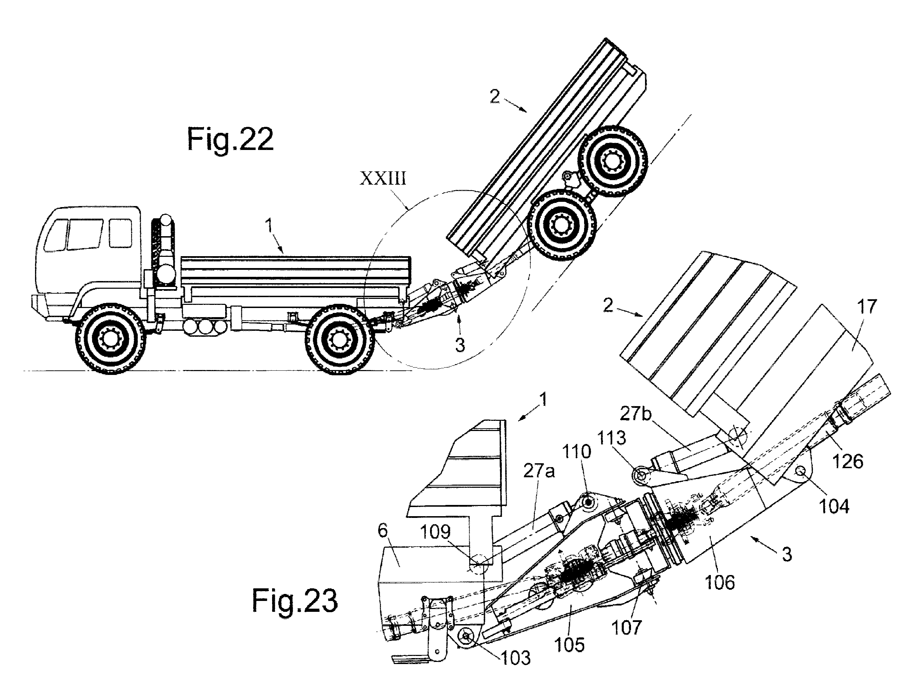

Figure 21 shows the centre section 3 (105,106) rotated downwards about the pivot 103 and the trailer 2 rotated downward about the pivot 104. A hydraulic cylinder 27a is connected at one end to the tractor chassis 6 at a pivot 109 and to the forward part 105 of the centre section 3 at a pivot 110. A second hydraulic cylinder 27b is connected to the trailer chassis 17 at a pivot 112 and to the rearward part 106 of the centre section 3 at a pivot 113. Angular movement up or down of the trailer 2 lengthens or shortens the hydraulic cylinders 27a and 27b enabling weight transfer and a damping of tractor-to-trailer nodding forces. Figure 22 shows the upward movement of the trailer 2 in relation to the tractor 1. Figure 23 shows the corresponding pivotal details. Downward movement of the trailer 2 causes the cylinder 27b to extend as in Figure 21. Upward movement causes it to retract as in Figure 23.

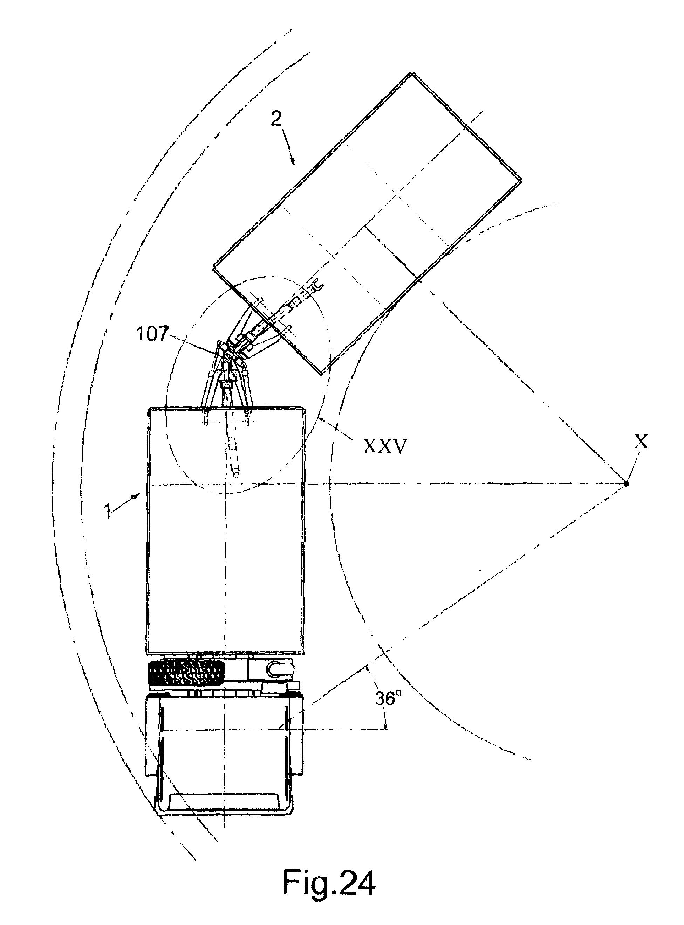

Figure 24 shows the tractor 1 with the trailer 2 rotated about the vertical pivot 107 so as to allow the combination to turn about an axis X.

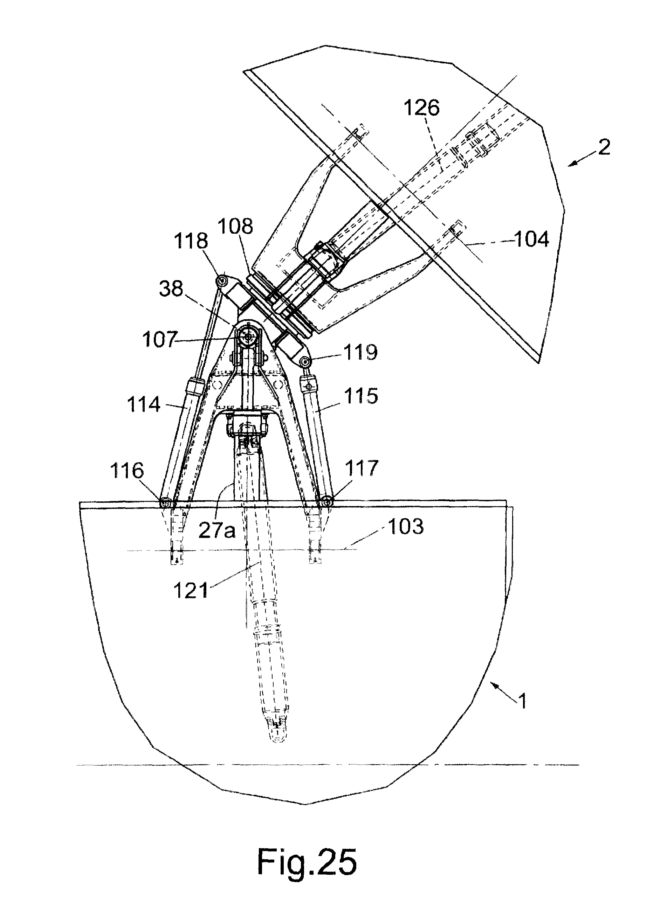

Two hydraulic cylinders 114 and 115 (accumulators) are connected to the forward part 105 of the centre section 3 at pivots 116 and 117 and at their other end are connected at pivots 118 and 119 to the front (non-rotating) portion of the bearing 108. Referring to Figure 25, turning the tractor 1 in relation to the trailer 2 has compressed a gas in cylinder 115 and expanded a gas in cylinder 114, thereby giving a corrective steering force to assist the steering wheels on the tractor 1 to overcome the straight-line effect of the trailer tandem axles. As the vehicle approaches the straight ahead condition the corrective forces are equalised.

Drive for the tractor 1 is transmitted from an output on a transfer gearbox or (as shown) from the rearmost axle 120 via a drive shaft 121 to a bearing 122 located in the forward part 105 of the centre section 3 connected to a drive shaft 123 supported at its other end by a bearing 124 which is equidistant from the pivot 107 with bearing 122. The drive is continued to the leading trailer axle 125 by a drive shaft 126. Any additional axles 127 are driven from the leading trailer axle 125.

## Claims

1. An articulated vehicle comprising:
a tractor unit (1) having a chassis (6), an engine (5) and transmission (10), and front and rear axles (8, 9);
a trailer unit (2) having a chassis (17) and at least front and rear axles (18a, 18c; 125, 127), the trailer unit (2) being spaced rearwardly of the tractor unit (1); and
a connecting section (3) which connects the tractor chassis (6) and the trailer chassis (17) together, the connecting section (3) having a forward end part (13;53;105) and a rearward end part (33) which are connected to the respective chassis (6, 17) and which are connected together so as to be pivotable about a vertical axis (38), at least one of the said end parts being connected to the associated chassis so as to be pivotable about a transverse axis (26; 103, 104) spaced from the said vertical axis (38).

2. An articulated vehicle as claimed in claim 1, in which the said end parts are connected together so as to be additionally pivotable about a longitudinal axis (34) relative to each other.

3. An articulated vehicle as claimed in claim 2, in which the said end parts are connected by a bearing defining the said longitudinal axis (34), the bearing being rearward of the said vertical axis (38).

4. An articulated vehicle as claimed in any preceding claim, further comprising a pivoting control device which controls pivoting about the said transverse axis (26; 103, 104).

5. An articulated vehicle as claimed in claim 4, in which the pivoting control device comprises at least one piston-and-cylinder device (27).

6. An articulated vehicle as claimed in claim 4 or 5, in which the pivoting control device is capable of applying to the tractor chassis (6) a moment of force about the said transverse axis (26; 103).

7. An articulated vehicle as claimed in any of claims 4 to 6, in which the pivoting control device is capable of damping oscillation about the said transverse axis (26; 103, 104).

8. An articulated vehicle as claimed in any preceding claim, in which the forward end part (13; 53; 105) is connected to the tractor chassis (6) by a transverse pivot (23; 103).

9. An articulated vehicle as claimed in claim 8, in which the rearward end part (106) is connected to the trailer (2) by a transverse pivot (104).

10. An articulated vehicle as claimed in any preceding claim, in which the trailer front axle (18a; 125) is kinematically connected to the transmission (10) by a series of drive shafts (46a-c; 121, 123, 126) that maintain constant velocity transmission of rotation at all angles between the tractor unit (1) and the trailer unit (2).

11. An articulated vehicle as claimed in any preceding claim, including an energy generation and storage system (39; 114, 115) responsive to changes in angle between centre-lines of the said end parts of the connecting section (3) due to relative turning of the said end parts about the said vertical axis (38), such that, as the angle increases, energy is generated and stored and the angular increase is resisted, and, as the angle decreases, stored energy is released and the angular decrease is assisted.

12. An articulated vehicle as claimed in claim 11, in which the said system comprises a pressure accumulator (39; 114, 115).

13. An articulated vehicle as claimed in any of claims 1 to 12, in which the forward end part of the connecting section has a frame (13) which extends forwardly of the said transverse axis (26), above a rear part of the tractor chassis (6).

14. An articulated vehicle as claimed in claim 13, further comprising a load-carrying body (14) mounted on the frame (13).

15. An articulated vehicle as claimed in any of claims 1 to 12, in which the tractor unit (1) has a load-carrying body (51), the forward end part (53; 105) of the connecting section (3) being connected to a rear end of the tractor chassis (6).
